# EUROPÄISCHE PATENTSCHRIFT

(11) **EP 3 760 904 B1**
(45) Veröffentlichungstag und Bekanntmachung des Hinweises auf die Patenterteilung: **22.02.2023**
(21) Anmeldenummer: 20178002.0
(22) Anmeldetag: 03.06.2020
(51) Int. Cl.: F16L 11/08, F16L 11/127, F16L 57/06, F16L 25/01

(54) **SCHLAUCH MIT SENSORLEITUNG**
HOSE WITH SENSOR LINE
TUYAU POURVU DE CONDUIT DE CAPTEUR

(30) Priorität: 02.07.2019 DE 102019209692
(43) Veröffentlichungstag der Anmeldung: 06.01.2021
(73) Patentinhaber: Eddelbüttel & Schneider GmbH, 21079 Hamburg (DE)
(72) Erfinder: Pagnanelli, Fabrizio - c/o Continental AG, 30419 Hannover (DE); Grepaly, Istvan - c/o Continental AG, 30419 Hannover (DE); Kovacs, Zsolt - c/o Continental AG, 30419 Hannover (DE)
(74) Vertreter: Continental Corporation

(56) Entgegenhaltungen:
- AT-U1- 6 114
- DE-A1-102017 105 365
- US-A1- 2004 065 377

## Beschreibung

Die Erfindung betrifft einen Schlauch mit mindestens einer Sensorleitung.

Aus dem Stand der Technik sind Schläuche grundsätzlich bekannt. Schläuche dienen zum Fördern von Flüssigkeiten. In die Flüssigkeiten können in Feststoffe oder Festkörper eingemischt sein. Diese Flüssigkeiten sollen weiterhin als Flüssigkeiten bezeichnet sein. In Kies- und Sandgruben wird oftmals Kies und/oder Sand mit Wasser vermischt, um die daraus entstehende Flüssigkeit mittels Schläuchen zu fördern. Nicht selten werden jedoch auch andere fluide Gemische als Flüssigkeit mit einem Schlauch gefördert. Beispielsweise können Schlamm und Schlick mittels eines Schlauchs gefördert werden. Bei Minen wird oftmals das aus dem Erdreich abgetragene Gestein mit Wasser vermischt, um die daraus entstehende Flüssigkeit mittels eines Schlauchs zu fördern.

Ein Schlauch weist eine rohrförmige Schlauchwand auf. Die Schlauchwand weist ein elastomeres Basismaterial auf, in das oftmals mindestens ein Festigkeitsträger eingebettet ist. Der Festigkeitsträger ist in Umfangsrichtung der rohrförmigen Schlauchwand ringförmig umlaufend oder spiralförmig gewendet ausgebildet. Ein entsprechender Umfangsradius oder Wendelradius des Festigkeitsträgers entspricht somit zumindest im Wesentlichen dem mittleren Durchmesser der rohrförmigen Schlauchwand. Der Festigkeitsträger dient zur Erhöhung der Festigkeit des Schlauchs in dessen Radialrichtung. Wird die Flüssigkeit mit einem hohen Druck durch den Schlauch gefördert, so kann der Festigkeitsträger dazu dienen, diesem Druck zerstörungsfrei standzuhalten. Die Schlauchwand eines Schlauchs erstreckt sich oftmals zwischen zwei Schlaukopplungsstücken. Die Schlauchkopplungsstücke können zumindest im Wesentlichen gleich ausgebildet sein. Mehrere Schläuche können derart hintereinander mittels der Schlauchkopplungsstücke gekoppelt werden, indem die Enden der Schläuche mittels der Kopplungsstücke lösbar verbunden werden. Durch die hintereinander verbundenen Schläuche kann ein Schlauchstrang entstehen, der sich über eine sehr große Länge erstrecken kann.

Der innere Durchmesser eines Schlauchs bzw. einer Schlauchwand kann grundsätzlich eine beliebige Größe aufweisen. Oftmals ist der innere Durchmesser eines Schlauchs jedoch im Bereich zwischen 5 cm und 3 m.

Wird mittels eines Schlauchs eine Flüssigkeit gefördert, in die Feststoffe oder Festkörper eingemischt sind, entsteht an der Innenseite der Schlauchwand eine Reibung zwischen den Feststoffen bzw. Festkörpern und dem elastomeren Basismaterial der Schlauchwand. Hierdurch wird die Schlauchwand an der Innenseite abgerieben. Dieser Abrieb an der Innenseite der Schlauchwand verringert die Festigkeit eines Schlauchs. Wird ein an der Innenseite durch Abrieb abgenutzter Schlauch nicht rechtzeitig gegen einen neuen Schlauch ausgetauscht, so besteht die Gefahr, dass die durch den Abrieb geschwächte Schlauchwand aufreißt. Der in einem solchen Fall entstehende Druckverlust der geförderten Flüssigkeit kann eine ungewollte Unterbrechung der Förderung der Flüssigkeit verursachen. Dies gilt insbesondere auch dann, wenn eine Vielzahl von Schläuchen miteinander verbunden ist, um einen Schlauchstrang zu bilden. Fällt einer dieser Schläuche aus, kommt die Förderung der Flüssigkeit durch den gesamten Schlauchstrang zum Erliegen. Derartige Ausfälle sind jedoch zu vermeiden.

Es ist deshalb wünschenswert, eine Abnutzung durch Abrieb oder Risse an der Mantelinnenseite einer Schlauchwand eines Schlauchs zu erfassen und rechtzeitig festzustellen, wenn die entsprechende Abnutzung an der Mantelinnenseite der Schlauchwand einen kritischen Wert erreicht, der den Austausch des Schlauchs signalisiert.

Aus dem Stand der Technik sind deshalb Schläuche mit einer Schlauchwand bekannt, in deren elastomerem Basismaterial in vorbestimmten, in Radialrichtung versetzten Abständen farbliche Markierungen eingebracht sind. Bei einem Abrieb an der Mantelinnenseite der Schlauchwand kommen die farbigen Markierungen zum Vorschein. Durch manuelle Inspektion der Mantelinnenseite der Schlauchwand kann deshalb über die jeweils sichtbare Farbe der Markierung auf den Abrieb an der Innenseite der Schlauchwand geschlossen werden. Eine derartige Inspektion ist mit einem hohen Aufwand und großen Kosten verbunden. Denn die Förderung der Flüssigkeit durch den Schlauch oder einen Schlauchstrang muss zunächst unterbrochen werden. Daraufhin bedarf es einer Spülung des Schlauchs bzw. des Schlauchstrangs mit sauberem Wasser. Schließlich ist der Schlauch bzw. der Schlauchstrang zu entleeren, um die Inspektion ausführen zu können. Es besteht deshalb der Wunsch, den entsprechenden Aufwand zu reduzieren.

In der EP 2 932 144 B1 wird ein Schlauch mit einer Schlauchwand vorgeschlagen, in der eine Vielzahl von Transpondern zur Detektion von Beschädigungen eingebettet ist. Die Transponder sind verteilt in der Schlauchwand angeordnet. Die Transponder können von außen per Funk angesteuert werden, sodass zu jedem der Transponder eine Funkverbindung aufbaubar ist. In der Praxis wurde jedoch festgestellt, dass die Verwendung von Transpondern zur Erfassung von Abrieb und/oder Beschädigungen mit einem nicht unerheblichen Aufwand verbunden ist. Zunächst müssen die Transponder einzeln bei der Produktion in die Schlauchwand eingebettet werden. Dies ist sehr aufwendig. Darüber hinaus handelt es sich bei den Transpondern um elektrische Schaltungen, die nicht selten auf einer starren Platine angeordnet sind. Die Transponder können deshalb bei starken Biege- und/oder Zugbeanspruchungen der Schlauchwand beschädigt werden, was sodann zum Ausfall eines entsprechenden Transponders führt.

Die DE 10 2017 105 365 A1 beschreibt ein Verfahren sowie ein System zur Anzeige des Verschleißes bei Schläuchen, umfassend die folgenden Schritte: a) Bereitstellen eines Schlauches, wobei der Schlauch eine Schlauchwand aus Kunststoff, eine Armierung aus Kunststoff oder Metall, und einen elektrischen Leiter umfasst, b) Bereitstellen einer elektrischen Messeinrichtung, c) Anlegen einer elektrischen Spannung an den elektrischen Leiter, d) Bestimmen einer elektrischen Größe des elektrischen Leiters durch die elektrische Messeinrichtung, und e) Erfassen von Änderungen der elektrischen Größe des elektrischen Leiters.

Das AT 006 114 U1 beschreibt einen Verschleißindikator für Schläuche aus Kunststoff oder Gummi zum Transport abrasiver Medien, welcher in der Schlauchwand angeordnet ist und zumindest einen elektrischen Leiter aufweist, welcher Teil eines elektronischen Schaltkreises ist. Es wird der zumindest eine elektrische Leiter aus einem elektrisch leitfähigen Kunststoff- oder Gummimaterial hergestellt und unter Ausbildung einer elektrischen Isolierschicht zur Innen- und zur Außenseite der Schlauchwand homogen in die Schlauchwand eingebettet. Der elektrische Leiter kann parallel zur Schlauchachse oder spiralförmig in der Schlauchwand geführt sein.

Der Erfindung liegt die Aufgabe zugrunde, einen Schlauch mit einer rohrförmigen Schlauchwand bereitzustellen, wobei eine Abnutzung an der Mantelinnenseite der Schlauchwand mit besonders einfachen Mitteln und zugleich robust gegenüber mechanischen Biege- und Zugbeanspruchungen erfasst werden kann.

Gelöst wird die Aufgabe durch einen Schlauch mit den Merkmalen des Anspruchs 1. Vorgesehen ist also ein Schlauch, der eine rohrförmige Schlauchwand und mindestens eine Sensorleitung aufweist. Die Schlauchwand weist ein elastomeres Basismaterial mit einem eingebetteten Festigkeitsträger auf. Jede Sensorleitung ist in das Basismaterial der Schlauchwand derart eingebettet, um eine Beschädigung und/oder Abnutzung an einer Mantelinnenseite der Schlauchwand zu erfassen. Jede Sensorleitung ist jeweils von einem helixförmig gewickelten Metalldraht oder von einem metallischen Netzstreifen gebildet.

Mit den Sensorleitungen kann die Abnutzung und/oder Beschädigung an der Mantelinnenseite der Schlauchwand besonders einfach erfasst werden. Tritt eine Abnutzung an der Mantelinnenseite der Schlauchwand auf, kann dies gleichzeitig zu einem punktuellen und/oder flächigen Abrieb der Sensorleitung führen, bis die Sensorleitung keinen durchgehenden, elektrischen Kontakt mehr hat. Die Sensorleitung ist sodann nicht mehr elektrisch leitfähig und/oder ist nicht mehr durchgängig. Dies kann mittels einfacher Sensortechnik erfasst werden. Der Schlauch mit den Sensorleitungen bietet deshalb die technische Möglichkeit, um die Abnutzung und/oder Beschädigung an der Mantelinnenseite der Schlauchwand zu erfassen.

Schläuche sind oftmals derart ausgelegt, dass eine gewisse Abnutzung an der Mantelinnenseite akzeptabel ist, ohne dass eine erhöhte Gefahr der Zerstörung des Schlauchs besteht. Mindestens eine Sensorleitung des Schlauchs kann deshalb in einem vorbestimmten, radialen Abstandsbereich zur Mantelinnenseite derart in das Basismaterial der Schlauchwand eingebracht sein, dass eine vollständige Abreibung an mindestens einer Stelle der Sensorleitung entsteht, wenn in dem entsprechenden Bereich die Mantelinnenseite der Schlauchwand soweit abgenutzt ist, dass die Schwelle der zulässigen Abnutzung erreicht ist. Wird die elektrische Durchgängigkeit, also der elektrische Kontakt zwischen den Leitungsenden (kurz: Enden) der jeweiligen Sensorleitung, mittels einer Sensortechnik erfasst, kann diese feststellen, dass die Durchgängigkeit der genannten Sensorleitung gerade dann aufgehoben ist, wenn die Schwelle der zulässigen Abnutzung an der Mantelinnenseite der Schlauchwand erreicht ist. Der Schlauch mit den Sensorleitungen erlaubt deshalb eine verlässliche Erfassung einer Beschädigung und/oder Abnutzung an der Mantelinnenseite der Schlauchwand.

Darüber hinaus ist es für den Schlauch vorgesehen, dass die Sensorleitungen jeweils von einem helixförmig gewickelten Metalldraht gebildet sind oder die Sensorleitungen jeweils von einem metallischen Netzstreifen gebildet sind. Jeder dieser beiden Ausgestaltungsvarianten einer Sensorleitung bietet den Vorteil, dass die Sensorleitung stark gedehnt und/oder gebogen werden kann, ohne dass die Dehnung und/oder Biegung zu einer Zerstörung der jeweiligen Sensorleitung führt. Mit anderen Worten bieten sowohl die helixförmige Wicklung der Sensorleitung als auch die netzförmige bzw. netzstreifenförmige Ausgestaltung der Sensorleitung eine hohe Dehnbarkeit und/oder Verformbarkeit der jeweiligen Sensorleitung. Diese Sensorleitungen erlauben deshalb eine gegenüber einer Dehnung und/oder Verformung des Schlauchs robuste Erfassung einer Beschädigung und/oder Abnutzung der Schlauchwand an der Mantelinnenseite. Insbesondere werden Erfassungsfehler durch eine Dehnung und/oder Verformung des Schlauchs vermieden. Darüber hinaus kann der Ausfall der Erfassung der Abnutzung und/oder Beschädigung mittels dieser Sensorleitungen gegenüber bekannten Maßnahmen deutlich reduziert werden.

Erfindungsgemäß ist ein Wicklungsdurchmesser jedes helixförmig gewickelten Metalldrahts kleiner als eine Wandstärke der Schlauchwand. Der Wicklungsdurchmesser des jeweils helixförmig gewickelten Metalldrahts ist vorzugsweise der in Radialrichtung des Schlauchs gemessene Durchmesser einer Wicklung des Metalldrahts. Der Wicklungsdurchmesser ist kleiner als die Wandstärke der Schlauchwand, sodass der helixförmig gewickelte Metalldraht in einem kleinen Winkelsegment der Schlauchwand gewickelt angeordnet sein kann, und sich aufgrund der zugehörigen Helixform in Längsrichtung der Schlauchwand erstrecken kann. Die Wandstärke der Schlauchwand ist vorzugsweise eine Dicke der Schlauchwand gemessen in einer Radialrichtung des Schlauchs.

Sind mehrere Sensorleitungen für den Schlauch vorgesehen, können die Sensorleitungen in Umfangsrichtung der Schlauchwand und/oder in Radialrichtung der Schlauchwand verteilt angeordnet sein. Vorzugsweise entsprechen die Umfangsrichtung und Radialrichtung des Schlauchs der Umfangsrichtung bzw. Radialrichtung der Schlauchwand. Sind beispielsweise vier Sensorleitungen vorgesehen, so können die vier Sensorleitungen jeweils um 90° versetzt in Umfangsrichtung der Schlauchwand angeordnet sein. Alternativ und/oder ergänzend ist eine Verteilung der Sensorleitungen in Radialrichtung möglich. Sind beispielsweise acht oder zwölf Sensorleitungen vorgesehen, so kann eine gerade Vielzahl von vier Sensorleitungen jeweils um 90° versetzt in Umfangsrichtung in der Schlauchwand eingebettet sein, wobei jeweils die Größe des Vielfachen von vier eine Anzahl von Sensorleitungen bestimmen kann, die in Radialrichtung beabstandet übereinander angeordnet sind. Eine Anordnung von mehreren helixförmig gewickelten Metalldrähten kann möglich sein, da der Wicklungsdurchmesser von jedem helixförmig gewickelten Metalldraht kleiner als die Wandstärke der Schlauchwand ist. So ist es beispielsweise möglich, dass der Wicklungsdurchmesser eines jeden helixförmig gewickelten Metalldrahts kleiner als 50 %, kleiner als 30 %, kleiner als 20 % oder kleiner als 15 % der Wandstärke der Schlauchwand ist. Dadurch können mehrere helixförmig gewickelte Metalldrähte in Radialrichtung übereinander und beanstandet voneinander in das Basismaterial der Schlauchwand eingebettet sein, ohne dass sich die Sensorleitungen direkt berühren. Denn bevorzugt ist es vorgesehen, dass die Sensorleitungen im Bereich zwischen ihren Enden keinen direkten Kontakt zueinander aufweisen. Vielmehr ist es bevorzugt vorgesehen, dass die Sensorleitungen im Bereich zwischen ihren Enden durch das Basismaterial der Schlauchwand voneinander getrennt angeordnet sind.

Der metallische Netzstreifen ist vorzugsweise von mindestens einem netzförmig verknüpften und/oder verbundenen Draht gebildet, sodass von dem mindestens einen Draht eine Netz- und/oder Maschenstruktur mit regelmäßigen und/oder unregelmäßigen Maschen sowie Kreuzungspunkten gebildet ist. An den Kreuzungspunkten stoßen zwei Abschnitte des gleichen Drahts oder unterschiedlicher Drähte aufeinander. Das von dem mindestens einen Draht gebildete, metallische Netz ist streifenförmig ausgestaltet. Die Länge des Netzstreifens ist deshalb größer als die Breite des Netzstreifens. Die Höhe des Netzstreifens ist wesentlich kleiner als die Breite und die Länge des Netzstreifens. Die Höhe des Netzstreifens kann beispielsweise das 1 ,5-fache bis das Fünffache eines mittleren Durchmessers eines Drahts sein, der zur Herstellung des Netzstreifens verwendet wird. Die Breite des Netzstreifens ist vorzugsweise mindestens das Dreifache der Höhe des Netzstreifens. Die Länge des Netzstreifens ist vorzugsweise mindestens das Sechsfache der Höhe des Netzstreifens. Durch die netzförmige Ausgestaltung des Netzstreifens kann der Netzstreifen besonders stark gedehnt und/oder gebogen werden, ohne dass es zu einer Zerstörung mit einer Unterbrechung zwischen zwei Teilen des Netzstreifens kommt. Vielmehr ist es bevorzugt vorgesehen, dass der Netzstreifen auch bei einer starken Dehnung und/oder Biegung einen durchgehend elektrischen Kontakt gewährleistet. Entsprechendes gilt für eine Sensorleitung aus einem derartigen Netzstreifen.

Sofern mehrere Sensorleitungen in Radialrichtung übereinander angeordnet sind, kann mittels der Sensorleitungen auch der Grad der Abnutzung und/oder Beschädigung der Mantelwandung erfasst werden. Umso weiter radial außenseitig eine Sensorleitung angeordnet ist, desto höher ist der Grad der Abnutzung und/oder Beschädigung der Mantelwandung. Basierend auf dem Grad der Abnutzung und/oder Beschädigung kann eine Wartung und/oder Reparatur geplant werden. Insbesondere kann die Wartung nach Bedarf erfolgen.

Erfindungsgemäß ist die Breite jedes metallischen Netzstreifens kleiner als eine Hälfte des Umfangs der Schlauchwand oder kleiner als ein Viertel des Umfangs der Schlauchwand. Der Umfang bezieht sich auf die Umfangslänge in Umfangsrichtung. Indem die Breite des jeweiligen Netzstreifens in Umfangsrichtung der Schlauchwand begrenzt ist, nämlich beispielsweise auf maximal die Hälfte oder maximal das Viertel des Umfangs der Schlauchwand, kann selbst eine starke Verformung der Schlauchwand keine Zerstörung des Netzstreifens hervorrufen. Insbesondere wenn die Breite des jeweiligen Netzstreifens kleiner als ein Viertel des Umfangs oder sogar kleiner als ein Achtel des Umfangs der Schlauchwand ist, ist es möglich, dass mehrere als Sensorleitung ausgebildete Netzstreifen in Umfangsrichtung der Schlauchwand verteilt angeordnet sind. Auf die entsprechenden Erläuterungen, wie sie hierzu zuvor im Zusammenhang mit den mehreren Sensorleitungen erklärt worden sind, wird in analogerweise Bezug genommen.

Eine vorteilhafte Ausgestaltung des Schlauchs zeichnet sich dadurch aus, dass jeder Netzstreifen der Umfangsrichtung der Schlauchwand folgend gewölbt ist. In der Breite erstreckt sich der jeweilige Netzstreifen deshalb vorzugsweise in Umfangsrichtung. Mit anderen Worten kann jeder Netzstreifen bis auf die zugehörigen Endabschnitte in einer Radialebene der Schlauchwand angeordnet sein.

Eine weitere vorteilhafte Ausgestaltung des Schlauchs zeichnet sich dadurch aus, dass sich jede Sensorleitung von einem ersten Endabschnitt der Schlauchwand zu einem zweiten Endabschnitt der Schlauchwand erstreckt. Die Endabschnitte beziehen sich vorzugsweise auf stirnseitige Endabschnitte. Vorzugsweise erstreckt sich die Schlauchwand in einer Längsrichtung der Schlauchwand zwischen dem ersten Endabschnitt der Schlauchwand und dem zweiten Endabschnitt der Schlauchwand. Jede der Sensorleitungen kann sich also bis auf die zugehörigen Enden in Längsrichtung der Schlauchwand erstrecken. Dadurch kann eine Abnutzung und/oder Beschädigung der Mantelinnenseite der Schlauchwand über die gesamte Länge der Schlauchwand mittels der mindestens einen Sensorleitung besonders zuverlässig erfasst werden.

Eine weitere vorteilhafte Ausgestaltung zeichnet sich dadurch aus, dass sich jede Sensorleitung in einer oder um eine Erstreckungsachse erstreckt, die parallel und beabstandet zu einer zentralen Längsachse des Schlauchs ist. Vorzugsweise ist jede Erstreckungsachse in dem Basismaterial der Schlauchwand angeordnet. Denn die zentrale Längsachse des Schlauchs erstreckt sich für gewöhnlich durch den Innenraum des Schlauchs, der nicht von dem Basismaterial der Schlauchwand gebildet ist. Vielmehr dient der Innenraum zum Fördern der Flüssigkeit zwischen den Enden des Schlauchs. Es ist jedoch bevorzugt vorgesehen, dass jede der Erstreckungsachsen bevorzugt parallel und radial beabstandet zu der zentralen Längsachse des Schlauchs ist. Wird mittels einer Sensorleitung eine Beschädigung und/oder Abnutzung festgestellt, lässt sich anhand der Umfangsposition der jeweiligen Sensorleitung besonders einfach ein Bereich in Umfangsrichtung der Schlauchwand eingrenzen, in dem die Beschädigung bzw. Abnutzung aufgetreten sein muss. Dies erlaubt eine besonders sichere, nachvollziehbare und zugleich schnelle Bestimmung des Bereichs oder der Stelle der jeweiligen Abnutzung bzw. Beschädigung.

Eine vorteilhafte Ausgestaltung des Schlauchs zeichnet sich dadurch aus, dass jede Sensorleitung derart schlaufenförmig angeordnet ist, sodass jede Sensorleitung zwei parallel zueinander angeordnete Leitungsabschnitte aufweist, die zu einem gemeinsamen Umlenkabschnitt führen. Jede Sensorleitung kann also als eine Schlaufe ausgebildet sein. Vorzugsweise weisen die beiden Leitungsabschnitte einer Sensorleitung einen derart geringen Abstand zueinander auf, sodass eine Unterbrechung und/oder Zerstörung eines der beiden Leitungsabschnitte mit der zumindest im Wesentlichen gleichen Umfangsposition und/oder Radialrichtungsposition verbunden ist. Die beiden Leitungsabschnitt der gleichen Sensorleitung weisen vorzugsweise keinen mechanischen Kontakt zueinander auf. Vorzugsweise sind sich durch Basismaterial getrennt. So kann sich beispielsweise ein Leitungsabschnitt einer Sensorleitung in Längsrichtung des Schlauchs vom ersten Endabschnitt der Schlauchwand zu dem anderen, zweiten Endabschnitt der Schlauchwand erstrecken, wo an dem genannten Leitungsabschnitt der Umlenkabschnitt anschließt, der den Übergang zum zweiten Leitungsabschnitt der gleichen Sensorleitung bildet. Dieser Leitungsabschnitt erstreckt sich von dem zweiten Endabschnitt der Schlauchleitung parallel zu dem vorherigen Leitungsabschnitt wieder zum ersten Endabschnitt der Schlauchwand. Diese Ausgestaltung bietet den Vorteil, dass beide Leitungsenden der Sensorleitung am gleichen Endabschnitt der Schlauchwand angeordnet sein können. Dies wiederum erlaubt eine besonders einfache Ankopplung der Sensorleitung an eine Auswerteeinheit, um die Durchgängigkeit und/oder elektrische Leitfähigkeit der Sensorleitung zu erfassen und/oder zu überwachen.

Eine vorteilhafte Ausgestaltung des Schlauchs zeichnet sich dadurch aus, dass ein erstes Ende jeder Sensorleitung mit einem zugehörigen ersten Sensoranschluss elektrisch gekoppelt ist, wobei ein zweites Ende jeder Sensorleitung mit dem Festigkeitsträger direkt oder indirekt elektrisch gekoppelt ist, wobei der Festigkeitsträger elektrisch leitfähig ist und sich über eine gesamte Länge der Schlauchwand erstreckt, und wobei der Festigkeitsträger mit einem zweiten Sensoranschluss gekoppelt ist. Der Abschnitt der jeweiligen Sensorleitung zwischen den beiden Enden der Sensorleitung kann in einem vorbestimmten, radialen Abstand zur Mantelinnenseite der Schlauchwand angeordnet sein. Dies gewährleistet die verlässliche Erkennung einer Abnutzung und/oder Beschädigung an der Mantelinnenseite. Um die Durchgängigkeit der jeweiligen Sensorleitung erfassen und/oder überwachen zu können, bedarf es einer elektrischen Kontaktierungsmöglichkeit. Deshalb ist es bevorzugt vorgesehen, dass das erste Ende einer jeweiligen Sensorleitung mit dem zugehörigen, ersten Sensoranschluss gekoppelt ist. Das zweite Ende der jeweiligen Sensorleitung ist mit dem Festigkeitsträger elektrisch gekoppelt. Der Festigkeitsträger erstreckt sich beispielsweise nach Art einer Spirale über die gesamte Länge der Schlauchwand und bietet deshalb die Möglichkeit, einen elektrischen Kontakt zu dem zweiten Ende der jeweiligen Sensorleitung herzustellen, ohne eine gesonderte Rückleitung vorzusehen. Durch die elektrische Kopplung des zweiten Endes der jeweiligen Sensorleitung mit dem Festigkeitsträger, ist es deshalb möglich, den Festigkeitsträger zu verwenden, um den elektrischen Kontakt zu dem zweiten Ende der jeweiligen Sensorleitung an einer anderen Stelle herzustellen. Vorzugsweise ist der mit dem Festigkeitsträger verbundene, zweite Sensoranschluss in unmittelbarer Nähe zu dem ersten Sensoranschluss der jeweiligen Sensorleitung angeordnet. So ist es beispielsweise möglich, dass beide Sensoranschlüsse für eine jeweilige Sensorleitung an dem gleichen Endabschnitt des Schlauchs angeordnet sind. Sind mehrere Sensorleitungen vorgesehen, so ist es beispielsweise möglich, dass ein gemeinsamer, zweiter Sensoranschluss für sämtliche Sensorleitungen vorgesehen ist, der mit dem Festigkeitsträger elektrisch verbunden ist. Für jede Sensorleitung ist darüber hinaus ein jeweils eindeutiger zugehöriger, erster Sensoranschluss bevorzugt vorgesehen. Sämtliche Sensoranschlüsse können darüber hinaus an dem gleichen Endabschnitt des Schlauchs angeordnet sein. Dies erleichtert die Ankopplung der Sensoranschlüsse an eine Auswerteeinheit, um die Durchgängigkeit und/oder elektrische Leitfähigkeit der Sensorleitungen zu erfassen und/oder zu überwachen.

Eine vorteilhafte Ausgestaltung des Schlauchs zeichnet sich deshalb dadurch aus, dass die Sensoranschlüsse an dem gleichen Endabschnitt des Schlauchs angeordnet sind. Auf die vorangegangen Erläuterungen wird in analogerweise Bezug genommen.

Eine vorteilhafte Ausgestaltung des Schlauchs zeichnet sich dadurch aus, dass das Basismaterial elektrisch isolierend ausgebildet ist. Das Basismaterial kann als elektrisch isolierend verstanden werden, wenn der spezifische elektrische Widerstand des Basismaterials größer als 10⁵ Ω*mm²/m oder größer als 10⁴ Ω*mm²/m ist.

Außerdem ist es bevorzugt vorgesehen, dass jede Sensorleitung (6) allein über das jeweils zugehörige zweite Ende (20) mit dem Festigkeitsträger (10) verbunden ist. Dies erlaubt eine genaue Erfassung einer Abnutzung und/oder Beschädigung der Mantelinnenseite der Schlauchwand in Bezug auf die Umfangsrichtung der Schlauchwand. Dies gilt insbesondere dann, wenn mehrere Sensorleitung in Umfangsrichtung verteilt in das Basismaterial eingebettet sind.

Eine vorteilhafte Ausgestaltung des Schlauchs zeichnet sich dadurch aus, dass sich die Schlauchwand von einem ersten, metallischen Schlauchkopplungsstück zu einem zweiten, metallischen Schlauchkopplungsstück erstreckt, wobei der Festigkeitsträger aus Metall ausgebildet und mit den Schlauchkopplungsstücken verbunden ist. Dadurch entsteht eine elektrische Verbindung zwischen den Schlauchkopplungsstücken und dem metallischen Festigkeitsträger. Werden mehrere Schläuche hintereinander verbunden, können diese über die Schlauchkopplungsstücke elektrisch verbunden sein. Dadurch kann ein gemeinsames, elektrisches Potenzial in Bezug auf die Festigkeitsträger geschaffen werden. Dieses gemeinsame elektrische Potenzial kann auf einem vorbestimmten Niveau gehalten werden. Hierzu kann eine elektrische Schaltung vorgesehen sein. Es ist jedoch auch möglich, dass das elektrische Potenzial der Festigkeitsträger geerdet ist. Durch das gemeinsame elektrische Potenzial können Messfehler reduziert werden. Dies gilt insbesondere dann, wenn die Festigkeitsträger geerdet sind. Denn in diesem Fall können beispielsweise induzierte Störspannungen in den Sensorleitungen besonders schnell und einfach ableitet werden.

Eine weitere vorteilhafte Ausgestaltung des Schlauchs zeichnet sich dadurch aus, dass an der Schlauchwand eine Auswerteeinheit befestigt ist, die mit jeder Sensorleitung direkt oder indirekt gekoppelt ist, wobei die Auswerteeinheit ausgebildet ist, die elektrische Leitfähigkeit und/der Durchgängigkeit von jeder Sensorleitung zu erfassen. So ist es beispielsweise möglich, dass jede Sensorleitung über das jeweils zugehörige, erste Ende direkt mit der Auswerteeinheit gekoppelt ist. Das jeweilige erste Ende einer Sensorleitung kann sich also bis in die Sensoreinheit erstrecken. Es ist jedoch auch möglich, dass eine indirekte Kopplung zwischen der Auswerteeinheit und dem jeweiligen, ersten Ende der Sensorleitung hergestellt ist. So kann beispielsweise das erste Ende einer jeden Sensorleitung über ein weiteres, zugehöriges Verbindungskabel mit der Auswerteeinheit gekoppelt sein.

Die Auswerteeinheit kann beispielsweise dazu ausgebildet sein, um den elektrischen Widerstand jeder Sensorleitung zu erfassen und/oder zu überwachen. Ist eine Sensorleitung nicht unterbrochen sondern durchgängig, so wird der elektrische Widerstand der Sensorleitung gering bzw. die elektrische Leitfähigkeit hoch sein. Ist die Sensorleitung jedoch unterbrochen, insbesondere durch die Abnutzung und/oder Beschädigung der Schlauchwand an der Mantelinnenseite, so wird die jeweilige Sensorleitung einen sehr hohen elektrischen Widerstand repräsentieren und/oder haben. Im gleichen Fall wird die jeweilige Sensorleitung eine sehr niedrige Leitfähigkeit aufweisen. Denn an der Bruchstelle ist die metallische Sensorleitung nicht mehr ausgebildet. Hingegen wird hier ein anders Medium eintreten, was für gewöhnlich einen deutlich höheren elektrischen Widerstand als das Metall der Sensorleitung hat. Die Auswerteeinheit kann durch die Ermittlung und/oder Überwachung des Widerstands einer jeweiligen Sensorleitung also ermitteln, ob die Sensorleitung elektrisch leitfähig und/oder durchgängig ist. Darüber hinaus kann die Sensorleitung eine Abnutzung und/oder eine Beschädigung feststellen, wenn eine Sensorleitung zumindest im Wesentlichen nicht mehr elektrisch leitfähig und/oder nicht mehr durchgängig ist.

Eine vorteilhafte Ausgestaltung des Schlauchs zeichnet sich dadurch aus, dass die Auswerteeinheit mit dem Festigkeitsträger direkt oder indirekt gekoppelt ist, um die elektrische Leitfähigkeit und/oder Durchgängigkeit von jeder Sensorleitung zu erfassen. Diese Ausgestaltung ist insbesondere dann von Vorteil, wenn das zweite Ende jeder Sensorleitung mit dem Festigkeitsträger verbunden ist. Denn in diesem Fall kann der Festigkeitsträger dazu verwendet werden, um den elektrischen Kontakt zwischen der Auswerteeinheit und dem jeweiligen zweiten Ende der Sensorleitungen herzustellen. Dass die zweiten Enden der Sensorleitungen mit dem gleichen Festigkeitsträger elektrisch verbunden sind, ist nicht von Nachteil. Denn das erste Ende jeder Sensorleitung ist außerdem mit der Auswerteeinheit direkt oder indirekt gekoppelt. Über den dezidierten Anschluss der ersten Enden der Sensorleitungen ist es deshalb der Auswerteeinheit möglich, die elektrische Leitfähigkeit und/oder Durchgängigkeit jeder der Sensorleitungen individuell zu ermitteln und/oder zu überwachen. Darüber hinaus ist es nicht nachteilig, wenn der Festigkeitsträger beispielsweise von einem spiralförmigen Festigkeitsträger aus Stahl gebildet ist. Ein derartiger Festigkeitsträger kann sich in Umfangsrichtung mit etwa dem gleichen Durchmesser wie die Schlauchwand durch das Basismaterial erstrecken. Durch die Spiralform erstreckt sich der Festigkeitsträger jedoch auch in Längsrichtung der Schlauchwand. Dadurch kann gewährleistet werden, dass die Auswerteeinheit beispielsweise an einem Endabschnitt des Schlauchs angeordnet ist und zugleich der elektrische Kontakt zwischen der Auswerteeinheit und den Enden der Sensorleitungen direkt oder indirekt besteht.

Eine vorteilhafte Ausgestaltung des Schlauchs zeichnet sich dadurch aus, dass die Auswerteeinheit ausgebildet ist, ein Auswertesignal zu erzeugen, das die elektrische Leitfähigkeit oder Durchgängigkeit der mindestens einen Sensorleitung repräsentiert, und wobei die Auswerteeinheit ausgebildet ist, das Auswertesignal drahtlos oder leitungsgebunden zu übertragen. Von der Auswerteeinheit kann beispielsweise ermittelt werden, welche der gekoppelten Sensorleitungen eine elektrische Leitfähigkeit und/oder Durchgängigkeit aufweist, und außerdem kann von der Auswerteeinheit ermittelt werden, welche der Sensorleitungen keine gewünschte elektrische Leitfähigkeit und/oder Durchgängigkeit aufweist. Eine gewünschte elektrische Leitfähigkeit ist insbesondere dann nicht mehr gegeben, wenn die zugehörige Sensorleitung durchbrochen, abschnittweise weggerieben und/oder durchschnitten ist. Die Auswerteeinheit kann dazu ausgebildet sein, dass das Auswertesignal die elektrische Leitfähigkeit und/oder Durchgängigkeit für jede der mit der Auswerteeinheit gekoppelten Sensorleitung individuell repräsentiert. Deshalb kann aus dem Auswertesignal die Information entnommen werden, welche der Sensorleitungen elektrisch leitfähig und/oder durchgängig ist, und welche der Sensorleitungen nicht elektrisch leitfähig bzw. nicht durchgängig ist bzw. sind. Das Auswertesignal kann von der Auswerteeinheit übertragen werden. Dies kann beispielsweise aufgrund einer elektronischen Abfrage erfolgen, die an die Auswerteeinheit gesendet wurde. Es ist jedoch auch möglich, dass die Auswerteeinheit das Auswertesignal selbstständig sendet.

Eine vorteilhafte Ausgestaltung des Schlauchs zeichnet sich dadurch aus, dass die Auswerteeinheit eine Funkeinheit zur Übertragung des Auswertesignals aufweist. Die Funkeinheit kann beispielsweise zum Senden des Auswertesignals ausgebildet sein. Die Funkeinheit kann jedoch auch zum Empfang eines Abfragesignals ausgebildet sein, das, wenn es empfangen wird, von der Auswerteeinheit ausgewertet wird und daraufhin das Aussenden des Auswertesignals initiiert wird. Die Funkeinheit kann integral mit der Auswerteeinheit ausgebildet sein. Es ist jedoch auch möglich, dass die Funkeinheit der Auswerteeinheit zugeordnet ist. In beiden Fällen soll dies so verstanden werden, dass die Funkeinheit einen Teil der Auswerteeinheit bildet.

Eine vorteilhafte Ausgestaltung des Schlauchs zeichnet sich dadurch aus, dass die Auswerteeinheit teilweise oder vollständig in das Basismaterial der Schlauchwand eingebettet ist. Durch die Einbettung der Auswerteeinheit in das Basismaterial der Schlauchwand kann besonders einfach und wirkungsvoll gewährleistet werden, dass die Auswerteeinheit vor äußeren mechanischen Beeinflussungen geschützt ist. Dies gilt insbesondere dann, wenn die Auswerteeinheit vollständig in das Basismaterial eingebettet ist. In diesem Fall kann die Auswerteeinheit vor äußeren mechanischen Schlägen und/oder Stößen geschützt sein. Aber selbst wenn die Auswerteeinheit nur teilweise in das Basismaterial eingebettet ist, besteht bereits ein höherer mechanischer Schutz. Diese Ausgestaltung bietet die Möglichkeit, dass die Auswerteeinheit besonders einfach und schnell gewartet werden kann.

Weitere Merkmale, Vorteile und Anwendungsmöglichkeiten der vorliegenden Erfindung ergeben sich aus der nachfolgenden Beschreibung der Ausführungsbeispiele und den Figuren. In den Figuren stehen weiterhin gleiche Bezugszeichen für gleiche oder ähnliche Objekte.
- Figur 1: zeigt einen Teil einer vorteilhaften Ausgestaltung eines Schlauchs in einer perspektivischen und schematischen Ansicht.
- Figur 2: zeigt den schematischen Querschnitt einer weiteren vorteilhaften Ausgestaltung eines Schlauchs.
- Figur 3: zeigt eine vorteilhafte Ausgestaltung eines Netzstreifens.
- Figur 4: zeigt den schematischen Querschnitt einer weiteren, vorteilhaften Ausgestaltung eines Schlauchs.
- Figur 5: zeigt eine vorteilhafte Ausgestaltung eines helixförmig gewickelten Metalldrahts in einer schematischen Darstellung.
- Figuren 6 - 8: zeigen jeweils einen Ausschnitt der Schlauchwand in unterschiedlichen Abnutzungsgraden in schematischen Darstellungen.
- Figur 9: zeigt eine weitere vorteilhafte Ausgestaltung des Schlauchs in einer schematischen Längsquerschnittsansicht.

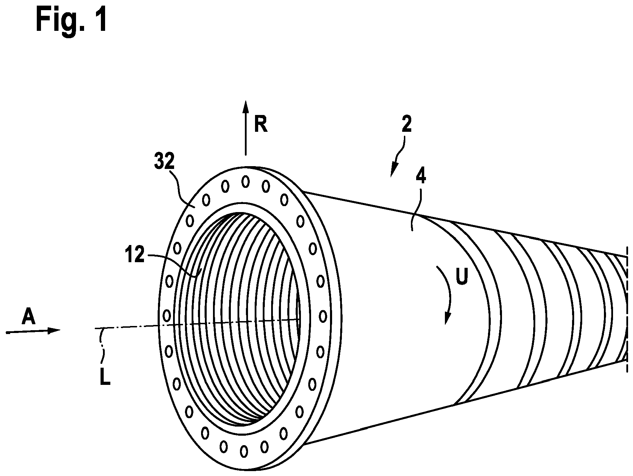

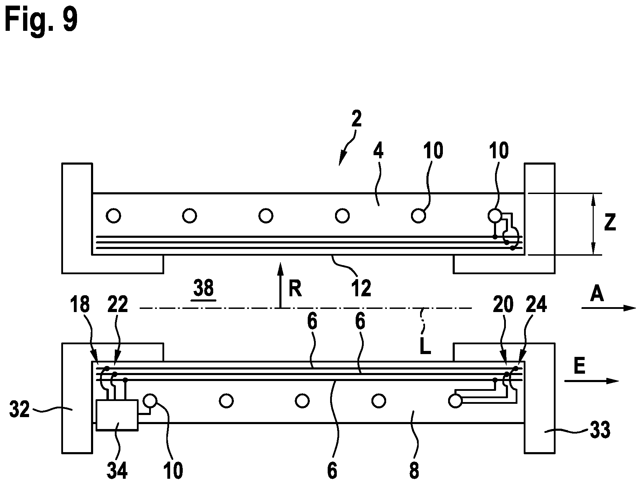

In der Figur 1 ist ein Teil einer vorteilhaften Ausgestaltung eines Schlauchs 2 in einer perspektivischen Ansicht schematisch dargestellt. Entlang einer Längsachse geschnitten ist der Schlauch 2 in der Figur 9 dargestellt. Der Schlauch 2 weist eine rohrförmige Schlauchwand 4 auf. Die Schlauchwand 4 weist ein elastomeres Basismaterial 8 auf. Das Basismaterial 8 ist vorzugsweise aus Gummi oder einem anderen elastomeren Kunststoff gebildet. Vorzugsweise ist ein Großteil der Schlauchwand 4 aus dem elastomeren Basismaterial 4 gebildet. Elastomeres Basismaterial 4 wird auch kurz als Basismaterial 4 bezeichnet. In das Basismaterial 4 ist mindestens ein Festigkeitsträger 10 eingebettet. Vorzugsweise ist der Festigkeitsträger 10 als ein spiralförmig gewundener Festigkeitsträger 10 ausgebildet. In der Figur 9 sind die Schnitte der Windungen des Festigkeitsträgers 10 deshalb als in Längsrichtung A des Schlauchs 2 versetzte Kreise dargestellt. Der Festigkeitsträger 10 ist vorzugsweise durch einen ununterbrochenen, metallischen Draht oder eine entsprechend spiralförmig geformte Rundstange gebildet. In der Praxis hat es sich als vorteilhaft herausgestellt, wenn der Festigkeitsträger 10 aus Metall, insbesondere aus Stahl ist. Denn in diesem Fall kann der Festigkeitsträger 10 die Festigkeit des Schlauchs 2 in dessen Radialrichtung R zumindest mitbestimmen. Dabei ist der Festigkeitsträger 10 in das Basismaterial 8 der Schlauchwand 4 eingebettet.

Der Schlauch 2 weist außerdem mehrere Sensorleitungen 6 auf. Jede der Sensorleitungen 6 ist in das Basismaterial 8 der Schlauchwand 4 eingebettet. Außerdem ist jede der Sensorleistungen 6 derart in die Schlauchwand 4 eingebettet, um eine Beschädigung und/oder Abnutzung an einer Mantelinnenseite 12 der Schlauchwand 4 erfassen zu können.

Wie es beispielhaft aus der Figur 9 zu entnehmen ist, sind die Sensorleitungen 6 in einer an die Mantelinnenseite 12 angrenzende Schicht der Schlauchwand 4 eingebettet. Wird die Schlauchwand 4 beim Fördern von Flüssigkeit mit Feststoffen und/oder Festkörpern abgerieben, kann es auch zu einem Abrieb und somit zu einer teilweisen Zerstören einer der Sensorleitungen 6 kommen. In diesem Fall wird die elektrische Leitfähigkeit und/oder die Durchgängigkeit der jeweiligen Sensorleitung 6 aufgehoben. Dies kann von einer Auswerteinheit 34 erfasst werden, die mit der jeweiligen Sensorleitung 6 gekoppelt ist. Hierauf soll jedoch erst später eingegangen werden. Grundsätzlich bietet der Schlauch 12 aber die Voraussetzungen, um diese Erfassung der Beschädigung und/oder Abnutzung der Schlauchwand an der Mantelinnenseite zu ermöglichen.

Vorzugsweise ist eine Vielzahl von Sensorleitungen 6 vorgesehen, die jeweils in das Basismaterial 8 der Schlauchwand 4 eingebettet sind. So kann es beispielsweise vorgesehen sein, dass der Schlauch 2 mindestens vier Sensorleitungen 6, mindestens acht Sensorleitungen 6 oder mindestens zwölf Sensorleitungen 6 aufweist.

Darüber hinaus hat es sich als vorteilhaft herausgestellt, wenn sich jede der Sensorleitungen 6 von einem ersten Endabschnitt 22 der Schlauchwand 4 zu einem zweiten Endabschnitt 24 der Schlauchwand 4 erstreck. Denn diese Ausgestaltung der Sensorleitungen 6 bietet den Vorteil, dass eine Beschädigung und/oder Abnutzung an der Mantelinnenseite 12 der Schlauchwand 4 über zumindest im Wesentlichen die gesamte Länge des Schlauchs 2 erfasst werden kann.

In der Praxis werden Schläuche 2 zum Fördern von Flüssigkeit eingesetzt, in die Feststoffe und/oder Festkörper eingemischt sind. Aufgrund des hohen Gewichts beim Fördern derartiger Flüssigkeit unterliegen die Schläuche 2 nicht selten einer Durchbiegung und/oder einer Dehnung in Längsrichtung A. Darüber hinaus werden Schläuche 2 oftmals über Kanten oder Vorsprünge hinweg verlegt, was zu einer entsprechen starken Dehnung in einem begrenzten Abschnitt des Schlauchs 2 führt. Gerade in derartigen Abschnitten findet jedoch eine sehr große Abnutzung und/oder Abreibung des Basismaterials 8 an der Mantelinnenseite 12 des Schlauchs 2 statt. Es ist deshalb besonders wünschenswert, dass die Sensorleitungen 6 auch bei einer großen Biegung und/oder Dehnung des Schlauchs 2 nicht zerstört werden, sondern weiterhin dazu geeignet sind, eine Beschädigung und/oder Abnutzung an der Mantelinnenseite 12 der Schlauchwand 4 erfassen zu können.

Für den Schlauch 2 ist es deshalb vorgesehen, dass jede Sensorleitung 6 jeweils von einem helixförmig gewickelten Metalldraht 14 oder von einem metallischen Netzstreifen 16 gebildet ist.

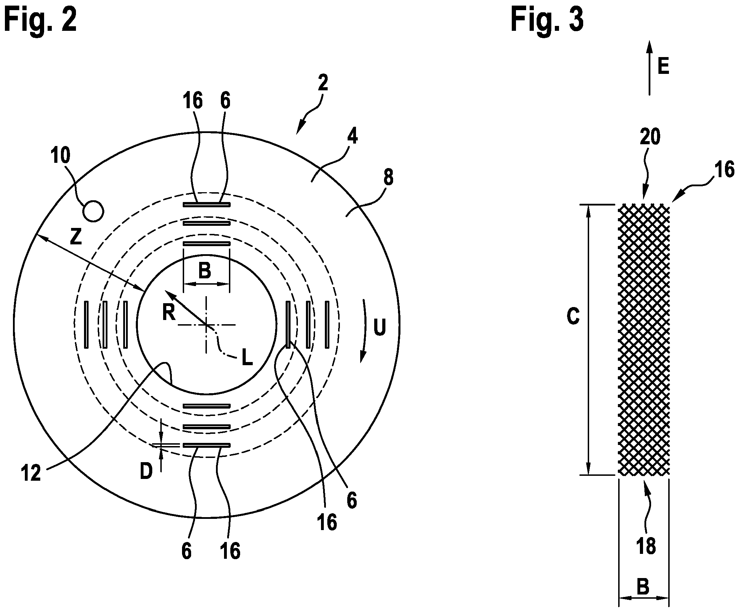

In der Figur 2 ist eine beispielhafte Ausgestaltung eines Schlauchs 2 in einer schematischen Querschnittsdarstellung wiedergegeben, wobei jede Sensorleitung 6 von einem metallischen Netzstreifen 16 gebildet ist. Ein derartiger Netzstreifen 16 ist schematisch in der Figur 3 in einer Draufsicht dargestellt. Der Netzstreifen 16 ist von einem oder mehreren gitterförmig angeordneten Metalldrähten gebildet. Die Breite B des Netzstreifens 16 ist kleiner als die Länge C des Netzstreifens 16. Jede der Sensorleitungen 6 ist von einem derartigen Netzstreifen 16 gebildet. Aufgrund der Querschnittsdarstellung in Fig. 2 sind die Netzstreifen 16 als Ausgestaltung der Sensorleitung 6 in Fig. 2 ebenfalls im Querschnitt dargestellt. Aus der Fig. 2 kann deshalb ebenfalls entnommen werden, dass die Höhe D eines jeden Netzstreifens 16 wesentlich kleiner als die Breite B bzw. die Länge C des Netzstreifens 16 ist.

Aus der Figur 2 ist außerdem beispielhaft zu entnehmen, dass die Sensorleitungen 6 in Radialrichtung R und in Umfangsrichtung U verteilt in dem Basismaterial 8 derart eingebettet angeordnet sind, sodass eine Abnutzung und/oder Beschädigung an der Mantelinnenseite 12 der Schlauchwand 4 mittels der Sensorleitungen 6 erfassbar ist. Wird beispielsweise ein radialinnenseitig angeordnete Sensorleitung 6 bei einer leichten oder geringen Abnutzung zunächst zerstört, sodass die Durchgängigkeit und/oder elektrische Leitfähigkeit diese Sensorleitung 6 nicht mehr gegeben ist, kann dies von einer mit den Sensorleitungen 6 gekoppelten Auswerteeinheit 34 erfasst werden. Aber selbst wenn das Fördern der Flüssigkeit mit eingemischten Feststoff oder Festkörper fortgesetzt wird, kann eine weitere Abnutzung mittels der weiteren Sensorleitung 6 erfasst werden, die radial außenseitig zu der zuvor abgenutzten Sensorleitung 6 angeordnet ist bzw. war. Grundsätzlich können in Radialrichtung R mehrere Sensorleitungen 6 fluchtend übereinander angeordnet sein. Diese in Radialrichtung R übereinander angeordneten Sensorleitungen 6 bilden eine Gruppe von Sensorleitungen 6. Für den Schlauch 2 können mehrere derartige Gruppen von Sensorleitungen 6 vorgesehen sein, wobei die Gruppen in Umfangsrichtung U versetzt, beispielsweise um einen Winkel von 90 Grad, angeordnet sind. Die in Umfangsrichtung U und in Radialrichtung R verteilte Anordnung der Sensorleitungen 6 bietet die Möglichkeit, dass die Abnutzung und/oder Beschädigung an der Mantelinnenseite 12 der Schlauchwand 4 besonders einfach, präzise und verlässlich erfassbar ist.

Die zuverlässige Erfassung mittels der Sensorleitungen 6 verschlechtert sich jedoch nicht, wenn der Schlauch 2 stark gedehnt oder stark gebogen ist. Denn insbesondere bei der in Figur 2 beispielhaft dargestellten Ausgestaltung des Schlauchs 2 ist es vorgesehen, dass jede der Sensorleitungen 6 von einem metallischen Netzstreifen 16 gebildet ist. Die netzförmige Struktur dieses Netzstreifens 16 erlaubt eine große Dehnung insbesondere in Richtung der Breite B und/oder der Richtung der Länge C. Der Netzstreifen 16 wird also auch bei einer starken Verbiegung und/oder Dehnung nicht zerstört. Dies gewährleistet die verlässliche Erfassungsmöglichkeit der Beschädigung und/oder Abnutzung an der Mantelinnenseite 12 der Schlauchwand 4.

Außerdem sei an dieser Stelle erwähnt, dass der im Querschnitt in Figur 2 dargestellte Schlauch rein schematisch wiedergegeben ist. Die tatsächlichen Proportionen in Bezug auf den Innendurchmesser und den Außendurchmesser des Schlauchs 2 bzw. der Schlauchwand 4 kann in der Praxis deutlich anders ausfallen.

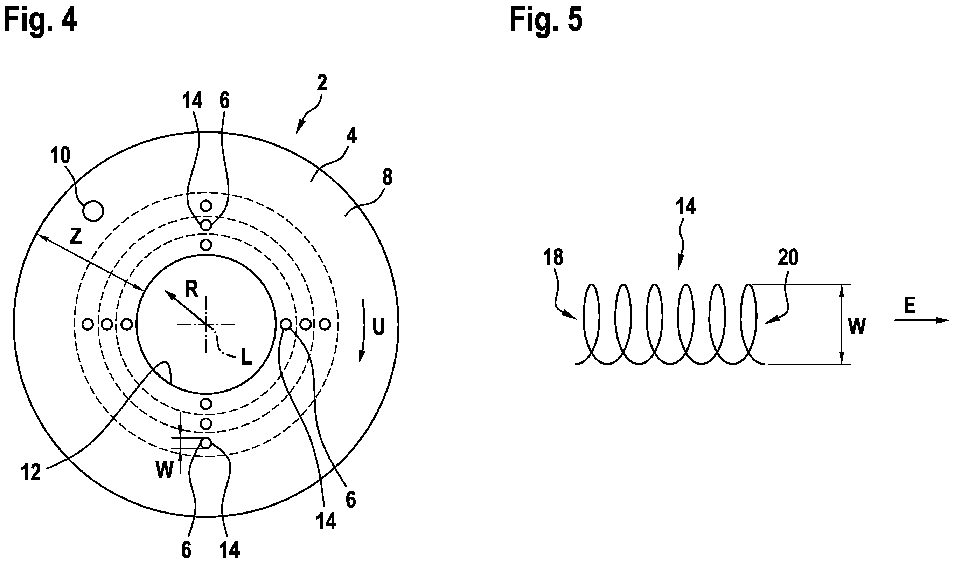

In der Figur 4 ist eine weitere vorteilhafte Ausgestaltung eines Schlauchs 2 in einer schematischen Querschnittsansicht gezeigt. Diese Ausgestaltung des Schlauchs 2 unterscheidet sich von der in Figur 2 dargestellten Ausgestaltung des Schlauchs 2 durch die jeweilige Ausgestaltung der Sensorleitungen 6. Denn für die Ausgestaltung des Schlauchs 2 aus Figur 4 ist es vorgesehen, dass jede Sensorleitung 6 jeweils von einem helixförmig gewickelten Metalldraht 14 gebildet ist. Auf die Erläuterungen zu der Ausgestaltung des Schlauchs 2 in Zusammenhang mit Figur 2 wird deshalb für die Ausgestaltung des Schlauchs 2 aus Figur 4 in analoger Weise Bezug genommen. Auf die sich auf die Ausgestaltung der Sensorleitung 6 als helixförmig gewickelten Metalldraht 14 beziehenden Eigenschaften, Effekte und/oder Vorteile wird im Folgenden eingegangen.

In der Figur 5 ist ein helixförmig gewickelter Metalldraht 14 beispielhaft dargestellt. Der helixförmig gewickelte Metalldraht 14 wird auch kurz als Metalldraht 14 bezeichnet. Der Metalldraht 14 ist derart gewickelt, dass sich der Metalldraht 14 von einem ersten Ende 18 zu einem zweiten Ende 20 erstreckt. Es wird deshalb auch davon gesprochen, dass sich der Metalldraht 14 in einer Erstreckungsrichtung entlang der Erstreckungsachse E erstreckt. Der Metalldraht 14 kann sich also in Erstreckungsrichtung um die Erstreckungsachse E erstrecken, und zwar zwischen dem ersten Ende 18 und dem zweiten Ende 20. Außerdem ist der Metalldraht 14 derart helixförmig gewickelt, dass der Metalldraht 14 einen Wicklungsdurchmesser W aufweist. Vorzugsweise ist der Wicklungsdurchmesser W jedes helixförmig gewickelten Metalldrahts 14 kleiner als eine Wandstärke Z der Schlauchwand 4.

Wie aus der Figur 4 beispielhaft und schematisch zu entnehmen ist, sind die jeweils als helixförmig gewickelten Metalldraht 14 ausgestalteten Sensorleitungen 6 in Radialrichtung R und in Umfangsrichtung U verteilt angeordnet. Auch von dieser Ausgestaltung der Sensorleitungen 6 werden mehrere Gruppen von Sensorleitungen 6 gebildet, wobei die Sensorleitungen 6 der gleichen Gruppe in Radialrichtung R verteilt angeordnet sind und die Gruppen in Umfangsrichtung U verteilt angeordnet sind. Um die Anordnung von mehreren helixförmig gewickelten Metalldrähten 14 zu erlauben, ist es von Vorteil, wenn der Windungsdurchmesser W eines jeden helixförmig gewickelten Metalldrahts 14 kleiner als 30 %, kleiner als 20 % oder kleiner als 15 % der Wandstärke Z der Schlauchwand 4 ist.

Aufgrund der helixförmigen Wicklung des Metalldrahts 14 kann der Metalldraht 14 ohne Zerstörung besonders stark gedehnt und/oder gebogen werden. Wenn die Sensorleitungen 6 also jeweils als ein helixförmig gewickelter Metalldraht 14 ausgebildet sind, hat es sich als vorteilhaft herausgestellt, dass der Schlauch 2 besonders stark durchgebogen und/oder gedehnt werden kann, ohne dass es zu einer Zerstörung der Sensorleitungen 6 führt bzw. kommt. Die durch helixförmig gewickelten Metalldrähte 14 ausgebildeten Sensorleitungen 6 sind also besonders robust gegen eine mechanische Verformung und/oder Dehnung des Schlauchs 2 und bieten selbst bei derartigen Belastungen eine zuverlässige Möglichkeit, um Beschädigungen und/oder Abnutzungen an der Mantelinnenseite 12 der Schlauchwand 4 erfassen zu können.

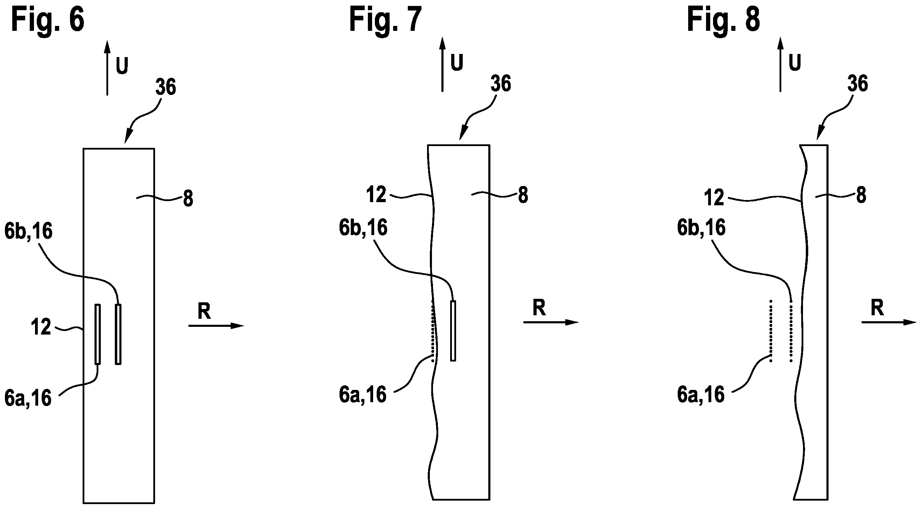

In den Figuren 6, 7 und 8 ist jeweils ein Ausschnitt 36 der Schlauchwand 4 im Querschnitt schematisch dargestellt. Die Mantelinnenseite 12 der Schlauchwand 4 ist jeweils an der linken Seite des Ausschnitts 36 ausgebildet. Hier strömt die Flüssigkeit mit dem eingemischten Feststoff oder den eingemischten Festkörpern vorbei, was zu einem Abrieb des Basismaterials 8 an der Mantelinnenseite 12 führt.

In der Figur 6 ist ein Fall dargestellt, bei dem eine erste Sensorleitung 6a in einem ersten radialen Abstand zur Mantelinnenseite 12 und eine zweite Sensorleitung 6b in einem zweiten radialen Abstand zur Mantelinnenseite 12 angeordnet sind, wobei der zweite radiale Abstand größer als der erste radiale Abstand ist. Findet nun ein Strömen der Flüssigkeit an der Mantelinnenseite 12 statt, wird das Basismaterial 8 kontinuierlich abgerieben.

In der Figur 7 ist der Fall dargestellt, bei dem das Basismaterial 8 soweit abgerieben wurde, dass auch die erste Sensorleitung 6a zumindest abschnittsweise durch Reibung zerstört ist. Die erste Sensorleitung 6a ist deshalb nur gepunktet angedeutet. Die Sensorleitung 6a weist deshalb zumindest im Wesentlichen keine elektrische Leitfähigkeit und keine Durchgängigkeit mehr auf. Dies kann von der Auswerteeinheit 34 erfasst werden.

Ein Schlauch 2 bzw. die zugehörige Schlauchwand 4 kann derart ausgestaltet sein, dass eine gewisse Abreibung an der Mantelinnenseite 12 der Schlauchwand 4 zulässig und/oder akzeptabel ist. Deshalb ist es von Vorteil, wenn mehrere Sensorleitungen 6a, 6b in Radialrichtung R übereinander angeordnet sind, um den Abnutzungsgrad der Abnutzung und/oder Beschädigung an der Mantelinnenseite 12 erfassen zu können.

Wird ein Schlauch 2 mit einer Schlauchwand 4 weiterverwendet, um Flüssigkeit mit eingemischtem Feststoff oder mit eingemischten Festkörpern zu fördern, so kann der weitere Abrieb an der Mantelinnenseite 12 dazu führen, dass auch die zweite

Sensorleitung 6b durch Abrieb zumindest abschnittweise zerstört wird. Dies ist beispielhaft und schematisch in Figur 8 für einen Ausschnitt 36 der Schlauchwand 4 dargestellt. Hierbei ist die abschnittsweise Zerstörung der zweiten Sensorleitung 6b gepunktet angedeutet. Die zweite Sensorleitung 6b ist durch den Abrieb nicht mehr durchgängig bzw. weist zumindest im Wesentlichen keine elektrische Leitfähigkeit mehr auf. Dies kann ebenfalls von der Auswerteeinheit 34 erfasst werden.

In der Figur 9 ist eine vorteilhafte Ausgestaltung des Schlauchs 2 in einer in Längsrichtung geschnittenen Darstellung schematisch wiedergegeben. Aus dieser Darstellung des Schlauchs 2 kann vorteilhaft entnommen werden, dass sich jede Sensorleitung 6 in einer oder um eine Erstreckungsachse E erstreckt, die parallel und beabstandet zu einer zentralen Längsachse L des Schlauchs 2 ist. Der Schlauch 2 weist einen zu beiden Enden offenen Innenraum 38 auf. Durch diesen Innenraum wird bei Verwendung des Schlauchs 2 die Flüssigkeit gefördert. Der Innenraum 38 ist deshalb mantelseitig durch die Schlauchwand 4 geschlossen ausgebildet. Da die Längsachse L als die zentrale Längsachse L des Schlauchs 2 bezeichnet ist, liegt die Längsachse L in dem Innenraum 38. Die Erstreckungsachse E für die jeweilige Sensorleitung 6 ist deshalb in Radialrichtung R von der zentralen

Längsachse L beabstandet. Außerdem ist bevorzugt vorgesehen, dass die Erstreckungsachse E parallel zu der Längsachse L ist. Denn dadurch kann gewährleistet werden, dass eine Abnutzung und/oder Beschädigung an der Mantelinnenseite 12 der Schlauchwand 4 zumindest im Wesentlichen über die gesamte Länge der Schlauchwand 4 erfassbar ist.

Als besonders vorteilhaft hat es sich herausgestellt, wenn sich jede Sensorleitung 6 mit einem ersten Ende 18 von dem ersten Endabschnitt 22 der Schlauchwand 4 zu einem zweiten Ende 20 erstreckt, wobei das zweite Ende 20 im zweiten Endabschnitt 24 der Schlauchwand 4 endet. Jede Sensorleitung 6 kann sich also von dem ersten Endabschnitt 22 zu dem zweiten Endabschnitt 24 der Schlauchwand 4 erstrecken, vorzugsweise in der zugehörigen Erstreckungsrichtung E.

Um eine einfache Erfassung der elektrischen Leitfähigkeit und der Durchgängigkeit jeder der Sensorleitungen 6 zu ermöglichen, ist es von Vorteil, wenn die Sensorleitungen 6 an einer zentralen und/oder vorbestimmten Stelle des Schlauchs 2 anschließbar sind, beispielsweise an die bevorzugt vorgesehene Auswerteeinheit 34.

Für den Schlauch 2 ist es deshalb bevorzugt vorgesehen, dass das zweite Ende 20 jeder Sensorleitung 6 mit dem Festigkeitsträger 10 elektrisch gekoppelt ist. Diese Kopplung kann direkt zwischen dem jeweiligen zweiten Ende 20 der Sensorleitung 6 und dem Festigkeitsträger 10 erfolgen. Es ist jedoch auch möglich, dass das zweite Ende 20 jeder Sensorleitung 6 über eine zugehörige Verbindungsleitung mit dem Festigkeitsträger 10 elektrisch gekoppelt ist. Wie aus der Figur 9 beispielhaft zu entnehmen ist, erstreckt sich der Festigkeitsträger 10 vorzugsweise spiralförmig durch das Basismaterial 8 der Schlauchwand 4. Dabei ist es jedoch bevorzugt vorgesehen, dass der Festigkeitsträger 10 radial außenseitig zu den Sensorleitungen 6 angeordnet ist. Dennoch ist der Festigkeitsträger 10 auch im zweiten Endabschnitt 24 der Schlauchwand 4 angeordnet, so dass eine sehr kurze Verbindung zwischen dem zweiten Ende 20 jeder Sensorleitung 6 und dem Festigkeitsträger 10 einfach herstellbar ist. Durch die spiralförmige Ausgestaltung ist der Festigkeitsträger 10 jedoch auch am ersten Endabschnitt 22 der Schlauchwand 4 und auch in jedem Abschnitt der Schlauchwand zwischen dem ersten und zweiten Ende 22, 24 der Schlauchwand 4 angeordnet. Deshalb ist es möglich, dass das erste Ende 18 jeder Sensorleitung 6 mit der im ersten Endabschnitt 22 der Schlauchwand 4 angeordneten Auswerteeinheit 34 gekoppelt ist, während das zweite Ende 20 jeder Sensorleitung 6 über den Festigkeitsträger 10 mit der gleichen Auswerteeinheit 34 elektrisch gekoppelt ist. Dazu kann eine weitere elektrische Verbindung zwischen dem Festigkeitsträger 10 und der Auswerteeinheit 34 sowie weitere Verbindungen zwischen dem ersten Ende 18 jeder Sensorleitung 6 und der Auswerteeinheit 34 vorgesehen sein. Die Auswerteeinheit 34 ist vorzugsweise dazu ausgebildet, ein Auswertesignal zu erzeugen, das die Leitfähigkeit und/oder Durchgängigkeit der Sensorleitungen 6 repräsentiert. Die Auswerteeinheit 34 kann außerdem dazu ausgebildet sein, das Auswertesignal drahtlos und/oder leitungsgebunden zu übertragen, insbesondere zu senden. Wenn eine drahtlose Übertragung bzw. ein drahtloses Senden vorgesehen sein soll, kann die Auswerteeinheit dazu ausgebildet sein, eine Funkeinheit, insbesondere eine integral ausgebildete Funkeinheit, zum Übertragen und/oder Senden des Auswertesignals aufzuweisen.

Außerdem ist es bevorzugt vorgesehen, dass das Basismaterial 8 elektrisch isolierend ist oder eine um einen Faktor 1.000 geringere elektrische Leitfähigkeit als jede der Sensorleitungen 6 aufweist. Die Sensorleitungen 6 weisen bis auf ihre Enden 18, 20 oder bis auf das zweite Ende 20 jeder Sensorleitung 6 keinen mechanischen Kontakt zueinander auf. Vielmehr ist es bevorzugt vorgesehen, dass zwischen benachbarten Sensorleitungen 6 Basismaterial 8 angeordnet ist, um einen unmittelbaren mechanischen Kontakt zwischen den Sensorleitungen 6 zu verhindern. Dadurch kann eine besonders gute Auflösung der Erfassung der Abnutzung und/oder Beschädigung der Mantelinnenseite 12 in Radialrichtung R ermöglicht werden.

### Bezugszeichenliste (Teil der Beschreibung)

- A: Längsrichtung
- B: Breite des Netzstreifens
- C: Länge des Netzstreifens
- D: Höhe des Netzstreifens
- E: Erstreckungsachse
- L: Längsachse
- R: Radialrichtung
- W: Wicklungsdurchmesser
- U: Umfangsrichtung der Schlauchwand
- Z: Wandstärke der Schauchwand
- 2: Schlauch
- 4: Schlauchwand
- 6: Sensorleitung
- 6a: erste Sensorleitung
- 6b: zweite Sensorleitung
- 8: Basismaterial
- 10: Festigkeitsträger
- 12: Mantelinnenseite
- 14: Metalldraht
- 16: Netzstreifen
- 18: erstes Ende einer Sensorleitung
- 20: zweites Ende einer Sensorleitung
- 22: erster Endabschnitt der Schlauchwand
- 24: zweiter Endabschnitt der Schlauchwand
- 26: Leitungsabschnitt
- 32: erstes Schlauchkopplungsstück
- 33: zweites Schlauchkopplungsstück
- 34: Auswerteeinheit
- 36: Ausschnitt der Schlauchwand
- 38: Innenraum

## Patentansprüche

1. Schlauch (2), aufweisend
eine rohrförmige Schlauchwand (4), und
mindestens eine Sensorleitung (6),
wobei die Schlauchwand (4) ein elastomeres Basismaterial (8) mit einem eingebetteten Festigkeitsträger (10) aufweist,
wobei jede Sensorleitung (6) in das Basismaterial (8) der Schlauchwand (4) derart eingebettet ist, um eine Beschädigung und/oder Abnutzung an einer Mantelinnenseite (12) der Schlauchwand (4) zu erfassen, und
wobei jede Sensorleitung (6) jeweils von einem helixförmig gewickelten Metalldraht (14) oder von einem metallischen Netzstreifen (16) gebildet ist,
wobei
ein Wicklungsdurchmesser W jedes helixförmig gewickelten Metalldrahts (14) kleiner als eine Wandstärke Z der Schlauchwand (4) ist oder
eine Breite B jedes metallischen Netzstreifens (16) kleiner als eine Hälfte oder ein Viertel des Umfangs der Schlauchwand (4) ist.

2. Schlauch (2) nach Anspruch 1, **dadurch gekennzeichnet, dass** sich jede Sensorleitung (6) von einem ersten Endabschnitt (22) der Schlauchwand (4) zu einem zweiten Endabschnitt (24) der Schlauchwand (4) erstreckt.

3. Schlauch (2) nach einem der vorhergehenden Ansprüche, **dadurch gekennzeichnet, dass** sich jede Sensorleitung (6) in einer oder um eine Erstreckungsachse E erstreckt, die parallel und beabstandet zu einer zentralen Längsachse L des Schlauchs (2) ist.

4. Schlauch (2) nach einem der vorhergehenden Ansprüche 1 bis 3, **dadurch gekennzeichnet, dass** jede Sensorleitung (6) derart schlaufenförmig angeordnet ist, so dass jede Sensorleitung (6) zwei parallel zueinander angeordnete Leitungsabschnitte aufweist, die zu einem gemeinsamen Umlenkabschnitt führen.

5. Schlauch (2) nach einem der vorhergehenden Ansprüche 1 bis 3, **dadurch gekennzeichnet, dass** ein erstes Ende (18) jeder Sensorleitung (6) mit einem zugehörigen ersten Sensoranschluss gekoppelt ist, wobei ein zweites Ende (20) jeder Sensorleitung (6) mit dem Festigkeitsträger (10) direkt oder indirekt elektrisch gekoppelt ist, wobei der Festigkeitsträger (10) elektrisch leitfähig ist und sich über eine gesamte Länge der Schlauchwand (4) erstreckt, und wobei der Festigkeitsträger (10) mit einem zweiten Sensoranschluss gekoppelt ist.

6. Schlauch (2) nach dem vorhergehenden Anspruch, **dadurch gekennzeichnet, dass** die Sensoranschlüsse an dem gleichen Endabschnitt (22, 24) des Schlauchs (2) angeordnet sind.

7. Schlauch (2) nach einem der vorhergehenden Ansprüche 5 bis 6, **dadurch gekennzeichnet, dass** das Basismaterial (8) elektrisch isolierend ausgebildet ist, wobei jede Sensorleitung (6) allein über das jeweils zugehörige zweite Ende (20) mit dem Festigkeitsträger (10) verbunden ist.

8. Schlauch (2) nach einem der vorhergehenden Ansprüche, **dadurch gekennzeichnet, dass** sich die Schlauchwand (4) von einem ersten, metallischen Schlauchkopplungsstück (32) zu einem zweiten, metallischen Schlauchkopplungsstück (33) erstreckt, wobei der Festigkeitsträger (10) aus Metall ausgebildet und mit den Schlauchkopplungsstücken (32, 33) verbunden ist.

9. Schlauch (2) nach einem der vorhergehenden Ansprüche, **dadurch gekennzeichnet, dass** an der Schlauchwand (4) eine Auswerteeinheit (34) befestigt ist, die mit jeder Sensorleitung (6) direkt oder indirekt gekoppelt ist, wobei die Auswerteeinheit (34) ausgebildet ist, die elektrische Leitfähigkeit und/oder Durchgängigkeit von jeder Sensorleitung (6) zu erfassen.

10. Schlauch (2) nach dem vorhergehenden Anspruch, **dadurch gekennzeichnet, dass** das die Auswerteeinheit (34) mit dem Festigkeitsträger (10) direkt oder indirekt gekoppelt ist, um die elektrische Leitfähigkeit und/oder Durchgängigkeit von jeder Sensorleitung (6) zu erfassen.

11. Schlauch (2) nach einem der vorhergehenden Ansprüche 9 bis 10, **dadurch gekennzeichnet, dass** die Auswerteeinheit (34) ausgebildet ist, ein Auswertesignal zu erzeugen, das die Leitfähigkeit oder Durchgängigkeit der mindestens einen Sensorleitung (6) repräsentiert, und wobei die Auswerteeinheit (34) ausgebildet ist, das Auswertesignal drahtlos oder leitungsgebunden zu übertragen.

12. Schlauch (2) nach dem vorhergehenden Anspruch, **dadurch gekennzeichnet, dass** die Auswerteeinheit (34) eine Funkeinheit zur Übertragung des Auswertesignals aufweist.

13. Schlauch (2) nach einem der vorhergehenden Ansprüche 9 bis 12, **dadurch gekennzeichnet, dass** die Auswerteeinheit (34) teilweise oder vollständig in das Basismaterial (8) der Schlauchwand (4) eingebettet ist.

## Claims

1. Hose (2) having
a tubular hose wall (4), and
at least one sensor line (6),
wherein the hose wall (4) has an elastomeric base material (8) with an embedded reinforcing support (10),
wherein each sensor line (6) is embedded in the base material (8) of the hose wall (4) so as to capture damage and/or wear and tear to a shell inner side (12) of the hose wall (4), and
wherein each sensor line (6) is respectively formed by a helically wound metal wire (14) or by a metal mesh strip (16),
wherein a winding diameter W of each helically wound metal wire (14) is smaller than a wall thickness Z of the hose wall (4), or
a width B of each metal mesh strip (16) is smaller than a half or quarter of the circumference of the hose wall (4).

2. Hose (2) according to Claim 1, **characterized in that** each sensor line (6) extends from a first end section (22) of the hose wall (4) to a second end section (24) of the hose wall (4).

3. Hose (2) according to one of the preceding claims, **characterized in that** each sensor line (6) extends in or around an axis of extent E which is parallel to and at a distance from a central longitudinal axis L of the hose (2).

4. Hose (2) according to one of the preceding Claims 1 to 3, **characterized in that** each sensor line (6) is arranged in the form of a loop in such a manner that each sensor line (6) has two line sections which are arranged parallel to one another and lead to a common deflection section.

5. Hose (2) according to one of the preceding Claims 1 to 3, **characterized in that** a first end (18) of each sensor line (6) is coupled to an associated first sensor connection, wherein a second end (20) of each sensor line (6) is directly or indirectly electrically coupled to the reinforcing support (10), wherein the reinforcing support (10) is electrically conductive and extends over an entire length of the hose wall (4), and wherein the reinforcing support (10) is coupled to a second sensor connection.

6. Hose (2) according to the preceding claim, **characterized in that** the sensor connections are arranged on the same end section (22, 24) of the hose (2).

7. Hose (2) according to one of the preceding Claims 5 to 6, **characterized in that** the base material (8) is electrically insulating, wherein each sensor line (6) is connected to the reinforcing support (10) solely via the respectively associated second end (20).

8. Hose (2) according to one of the preceding claims, **characterized in that** the hose wall (4) extends from a first metal hose coupling piece (32) to a second metal hose coupling piece (33), wherein the reinforcing support (10) is formed from metal and is connected to the hose coupling pieces (32, 33).

9. Hose (2) according to one of the preceding claims, **characterized in that** an evaluation unit (34) is fastened to the hose wall (4) and is directly or indirectly coupled to each sensor line (6), wherein the evaluation unit (34) is designed to capture the electrical conductivity and/or continuity of each sensor line (6).

10. Hose (2) according to the preceding claim, **characterized in that** the evaluation unit (34) is directly or indirectly coupled to the reinforcing support (10) in order to capture the electrical conductivity and/or continuity of each sensor line (6).

11. Hose (2) according to one of the preceding Claims 9 to 10, **characterized in that** the evaluation unit (34) is designed to generate an evaluation signal which represents the conductivity or continuity of the at least one sensor line (6), and wherein the evaluation unit (34) is designed to transmit the evaluation signal in a wireless or wired manner.

12. Hose (2) according to the preceding claim, **characterized in that** the evaluation unit (34) has a radio unit for transmitting the evaluation signal.

13. Hose (2) according to one of the preceding Claims 9 to 12, **characterized in that** the evaluation unit (34) is partially or completely embedded in the base material (8) of the hose wall (4).

## Revendications

1. Tuyau (2), présentant
une paroi de tuyau tubulaire (4), et
au moins un conduit de capteur (6),
dans lequel la paroi de tuyau (4) présente un matériau de base élastomère (8) pourvu d'un élément de renfort (10) incorporé,
dans lequel chaque conduit de capteur (6) est incorporé dans le matériau de base (8) de la paroi de tuyau (4) de façon à détecter un endommagement et/ou une usure au niveau d'une surface intérieure de gaine (12) de la paroi de tuyau (4), et
dans lequel chaque conduit de capteur (6) est respectivement formé par un fil métallique (14) enroulé en spirale ou par une bande de treillis métallique (16),
dans lequel un diamètre d'enroulement W de chaque fil métallique (14) enroulé en spirale est inférieur à une épaisseur de paroi Z de la paroi de tuyau (4), ou une largeur B de chaque bande de treillis métallique (16) est inférieure à une moitié ou à un quart de la circonférence de la paroi de tuyau (4).

2. Tuyau (2) selon la revendication 1, **caractérisé en ce que** chaque conduit de capteur (6) s'étend d'une première section d'extrémité (22) de la paroi de tuyau (4) à une deuxième section d'extrémité (24) de la paroi de tuyau (4).

3. Tuyau (2) selon l'une quelconque des revendications précédentes, **caractérisé en ce que** chaque conduit de capteur (6) s'étend dans un ou autour d'un axe d'extension E qui est parallèle et espacé par rapport à un axe longitudinal central L du tuyau (2).

4. Tuyau (2) selon l'une quelconque des revendications précédentes 1 à 3, **caractérisé en ce que** chaque conduit de capteur (6) est disposé en boucle de telle sorte que chaque conduit de capteur (6) présente deux sections de conduit disposées en parallèle l'une à l'autre qui mènent à une section de renvoi commune.

5. Tuyau (2) selon l'une quelconque des revendications précédentes 1 à 3, **caractérisé en ce qu'**une première extrémité (18) de chaque conduit de capteur (6) est couplée à un premier connecteur de capteur associé, dans lequel une deuxième extrémité (20) de chaque conduit de capteur (6) est directement ou indirectement couplée électriquement à l'élément de renfort (10), dans lequel l'élément de renfort (10) est électriquement conducteur et s'étend sur une longueur totale de la paroi de tuyau (4), et dans lequel l'élément de renfort (10) est couplé à un deuxième connecteur de capteur.

6. Tuyau (2) selon la revendication précédente, **caractérisé en ce que** les connecteurs de capteur sont disposés sur la même section d'extrémité (22, 24) du tuyau (2).

7. Tuyau (2) selon l'une quelconque des revendications précédentes 5 à 6, **caractérisé en ce que** le matériau de base (8) est réalisé de manière électriquement isolante, dans lequel chaque conduit de capteur (6) est relié à l'élément de renfort (10) uniquement par la deuxième extrémité (20) respectivement associée.

8. Tuyau (2) selon l'une quelconque des revendications précédentes, **caractérisé en ce que** la paroi de tuyau (4) s'étend d'une première pièce de couplage de tuyau métallique (32) à une deuxième pièce de couplage de tuyau métallique (33), dans lequel l'élément de renfort (10) est réalisé en métal et est relié aux pièces de couplage de tuyau (32, 33).

9. Tuyau (2) selon l'une quelconque des revendications précédentes, **caractérisé en ce que** sur la paroi de tuyau (4) est fixée une unité d'évaluation (34) qui est couplée directement ou indirectement à chaque conduit de capteur (6), dans lequel l'unité d'évaluation (34) est réalisée afin de détecter la conductivité et/ou la continuité électrique(s) de chaque conduit de capteur (6).

10. Tuyau (2) selon la revendication précédente, **caractérisé en ce que** l'unité d'évaluation (34) est couplée directement ou indirectement à l'élément de renfort (10) afin de détecter la conductivité et/ou la continuité électrique(s) de chaque conduit de capteur (6).

11. Tuyau (2) selon l'une quelconque des revendications précédentes 9 à 10, **caractérisé en ce que** l'unité d'évaluation (34) est réalisée pour générer un signal d'évaluation qui représente la conductivité ou la continuité du au moins un conduit de capteur (6), et dans lequel l'unité d'évaluation (34) est réalisée pour transmettre le signal d'évaluation sans fil ou de manière filaire.

12. Tuyau (2) selon la revendication précédente, **caractérisé en ce que** l'unité d'évaluation (34) présente une unité de fonction pour transmettre le signal d'évaluation.

13. Tuyau (2) selon l'une quelconque des revendications 9 à 12, **caractérisé en ce que** l'unité d'évaluation (34) est incorporée partiellement ou totalement dans le matériau de base (8) de la paroi de tuyau (4).
